# EUROPEAN PATENT SPECIFICATION

(11) **EP 3 809 491 B1**
(45) Date of publication and mention of the grant of the patent: **29.03.2023**
(21) Application number: 20201487.4
(22) Date of filing: 13.10.2020
(51) Int. Cl.: H01M 4/04, H01M 4/131, H01M 4/1391, H01M 4/525, H01M 4/66, H01M 4/80, H01M 4/02, H01M 10/052, H01M 10/056

(54) **ELECTRODE FOR LITHIUM ION SECONDARY BATTERIES AND LITHIUM ION SECONDARY BATTERY**
ELEKTRODE FÜR LITHIUM-IONEN-SEKUNDÄRBATTERIEN SOWIE LITHIUM-IONEN-SEKUNDÄRBATTERIE
ÉLECTRODE POUR BATTERIES SECONDAIRES LITHIUM-ION ET BATTERIE SECONDAIRE LITHIUM-ION

(30) Priority: 15.10.2019 JP 2019188756
(43) Date of publication of application: 21.04.2021
(73) Proprietor: Honda Motor Co., Ltd., Minato-ku Tokyo 107-8556 (JP); Sumitomo Electric Industries, Ltd., Osaka-shi, Osaka 541-0041 (JP)
(72) Inventor: TANAAMI, Kiyoshi, Saitama, 351-0193 (JP); ISOGAI, Yuji, Saitama, 351-0193 (JP); AOYAGI, Shintaro, Saitama, 351-0193 (JP); SAKAI, Hideki, Saitama, 351-0193 (JP); OKUNO, Kazuki, Osaka-shi, Osaka-fu, 541-0041 (JP); HOSOE, Akihisa, Osaka-shi, Osaka-fu, 541-0041 (JP); SENOO, Kikuo, Osaka-shi, Osaka-fu, 541-0041 (JP); TAKEBAYASHI, Hiroshi, Osaka-shi, Osaka-fu, 541-0041 (JP)
(74) Representative: Herzog, Markus

(56) References cited:
- CN-A- 109 786 757
- CN-A- 110 165 289

## Description

This application is based on and claims the benefit of priority from Japanese Patent Application No. 2019-188756, filed on 15 October 2019.

### BACKGROUND OF THE INVENTION

### Field of the Invention

The present invention relates to an electrode for lithium ion secondary batteries, and a lithium ion secondary battery made using this electrode for lithium ion batteries.

### Related Art

Thus far, lithium ion secondary batteries are becoming widespread as secondary batteries having high energy density.
Lithium ion secondary batteries have a structure made by having a separator between the positive electrode and negative electrode, and filling a liquid electrolyte (electrolytic solution).

Herein, since the electrolytic solution of the lithium ion secondary battery is usually a combustible organic solution, there have been cases where the stability to heat in particular is a problem.
Therefore, in place of an organic-based liquid electrolyte, a lithium ion solid-state battery made using an inorganic-based solid electrolyte has been proposed (refer to Patent Document 1).

For such a lithium ion secondary battery, there are various requirements according to the application, and in the case of the application being an automobile or the like, for example, there is a demand for further raising the volume energy density.
To address this, methods for increasing the filling density of electrode active material can be exemplified.

As a method of increasing the filling density of electrode active material, it has been proposed to use foam metal as the collector constituting the positive electrode layer and the negative electrode layer (refer to Patent Documents 2 and 3).
The foam metal has a network structure with uniform micropore size, and large surface.
By filling the electrode mixture containing the electrode active material inside of this network structure, it is possible to increase the amount of active material per unit area of the electrode layer.
Patent Document 1: Japanese Unexamined Patent Application, Publication No. 2000-106154
Patent Document 2: Japanese Unexamined Patent Application, Publication No. H7-099058
Patent Document 3: Japanese Unexamined Patent Application, Publication No. H8-329954

CN 109 786 757 A discloses an electrode for lithium-ion batteries comprising an aluminum foam porous body coated with a carbon layer. An additional oxide layer exists on the surface of the aluminum naturally leading to an oxide layer between the aluminum core and the surface coating of carbon. The carbon coating is obtained by thermal decomposition of hydrocarbons on the surface of the aluminum foam at high temperature in a furnace.

CN 110 165 289 A discloses a lithium-ion battery comprising a positive electrode, a negative electrode and a separator, the positive electrode including a carbon coated aluminum foam.

### SUMMARY OF THE INVENTION

However, conventional, in an electrode made using foam metal as the collector, voids occur between the foam metal body and electrode mixture, a result of which the electron path to the electrode active material is deficient and the electronic resistance increases, and thus increases the resistance of the formed lithium ion secondary battery cell.
Furthermore, by the resistance increasing, the cycle characteristic also declines.

In addition, since an oxide layer which is an insulating body is formed on the surface of the foam metal body, the supply of electrons is deficient and the electronic resistance increases, a result of which a problem also arises in that the output characteristic of the lithium ion secondary battery declines.

The present invention has been made taking account of the above, and an object thereof is to provide an electrode for lithium ion secondary batteries, and a lithium ion secondary battery made using this electrode for lithium ion secondary batteries, which can sufficiently secure electron conductivity
between a foam metal body and an electrode active material in an electrode for lithium ion secondary batteries which establish a foam metal body as the collector, reduce the resistance of a lithium ion secondary batter, and improve the durability.

The present inventors have carried out thorough examination in order to solve the above problem.
Then, it was found that it is possible to sufficiently secure electrode conductivity between the foam metal body and electrode active material if disposing a carbon layer consisting of carbon material on the surface of a foam porous body consisting of metal and using as the collector, thereby arriving at completion of the present invention.

The present invention provides an electrode for lithium ion secondary batteries according to claim 1.

The collector may further have an oxide layer consisting of an oxide of the metal between the foam porous body and the carbon layer.

The foam porous body may be a foam aluminum.

The electrode for lithium ion secondary batteries may be a positive electrode.

In addition, the present invention also provides a lithium ion secondary battery according to claim 5.

According to the electrode for lithium ion secondary batteries of the present invention, in the case of configuring a lithium ion secondary battery, it is possible to obtain a lithium ion secondary battery for which the resistance decreases, and the durability improves.

### BRIEF DESCRIPTION OF THE DRAWINGS

FIG. 1A provides a view showing a foam porous body 1 consisting of metal;
FIG. 1B provides a view showing a collector of the electrode for lithium ion secondary batteries of the present invention;
FIG. 2A provides an enlarged photo of the electrode for lithium ion secondary batteries of the present invention;
FIG. 2B provides an enlarged photo of a conventional electrode for lithium ion secondary batteries made using a foam porous body as the collector;
FIG. 3 is a view showing a laminated configuration of a collector used in the electrode for lithium ion secondary batteries of the present invention;
FIG. 4 is a graph showing initial cell resistance of lithium ion secondary batteries prepared in the Examples and Comparative Examples;
FIG. 5 is a graph showing the C-rate characteristic of lithium ion secondary batteries prepared in the Examples and Comparative Examples;
FIG. 6 is a graph showing the capacity retention rate for every 200 cycles of lithium ion secondary batteries prepared in the Examples and Comparative Examples; and
FIG. 7 is a graph showing the resistance change rate after 600 endurance cycles of the lithium ion secondary batteries prepared in the Examples and Comparative Examples.

### DETAILED DESCRIPTION OF THE INVENTION

Hereinafter, an embodiment of the present invention will be explained while referencing the drawings.

### <Electrode for Lithium Ion Batteries>

The electrode for lithium ion batteries of the present invention includes: a collector, and an electrode mixture filled into the collector.
The collector has a carbon layer consisting of a carbon material on a surface of the foam porous body consisting of metal.

The batteries to which the electrode for lithium ion secondary batteries of the present invention can be applied are not particularly limited.
It may be a liquid lithium ion secondary battery including a liquid electrolyte, or may be a solid-state battery including a solid or gel electrolyte.
In addition, in the case of applying in a battery including a solid or gel electrolyte, the electrolyte may be organic or may be inorganic.

In addition, the electrolyte for lithium ion secondary batteries of the present invention can be used without problem even if be applied to the positive electrode of a lithium ion secondary battery, applied to the negative electrode, or applied to both.
When comparing the positive electrode and negative electrode, since the electron conductivity of the active material which can be used in the negative electrode is high, the electrode for lithium ion secondary batteries of the present invention can acquire a higher effect when used in the positive electrode.

### (Electrode Mixture)

In the present invention, the electrode mixture filled into the collector of the foam porous body at least includes the electrode active material.
The electrode mixtures which can be applied to the present invention may optionally include other components, so long as including the electrode active material as an essential component.
The other components are not particularly limited, and it is sufficient so long as being a component which can be used upon preparing the lithium ion secondary battery.
For example, a solid-state electrode, conductive auxiliary agent, binding agent, etc. can be exemplified.

In the case of the electrode mixture constituting the positive electrode, it may include at least the positive electrode active material, and as other components, may include a solid-state electrolyte, conduction auxiliary agent, binding agent, etc., for example.
As the positive electrode active material, so long as being a material which can occlude and release lithium ions, it is not particularly limited; however, LiCoO₂, Li(Ni_{5/10}Co_{2/10}Mn_{3/10})O₂, Li(Ni_{6/10}Co_{2/10}Mn_{2/10})O₂, Li(Ni_{8/10}Co_{1/10}Mn_{1/10})O₂, Li(Ni_{0.8}Co_{0.15}Al_{0.05})O₂, Li(Ni_{1/6}Co_{4/6}Mn_{1/6})O₂, Li(Ni_{1/3}Co_{1/3}Mn_{1/3})O₂, LiCoO₄, LiMn₂O₄, LiNiO₂, LiFePO₄, lithium sulfide, sulfur, etc. can be exemplified.

In the case of the electrode mixture constituting the negative electrode, it may include at least the negative electrode active material, and as other components, may include a solid-state electrolyte, conduction auxiliary agent, binding agent, etc., for example.
As the negative electrode active material, although not particularly limited so long as being able to occlude and release lithium ions, for example, it is possible to exemplify metallic lithium, lithium alloy, metal oxide, metal sulfide, metal nitride, Si, SiO, and carbon materials such as artificial graphite, natural graphite, hard carbon and soft carbon.

### (Collector)

The collector used in the electrode for lithium ion secondary batteries of the present invention has a carbon layer consisting of carbon material, on the surface of a foam porous body consisting of metal.

### (Foam Porous Body Consisting of Metal)

The foam porous body consisting of metal is not particular limited so long as being a porous body of metal having voids due to foaming.
The metal foam has a network structure, in which the surface volume is high.
By using a foam porous body consisting of metal as the collector, it is possible to fill the electrode mixture containing electrode active material inside of this network structure, and thus possible to increase the active material amount per unit volume of the electrode layer, and possible to improve the volume energy density of the lithium ion secondary battery.

In addition, since immobilization of the electrode mixture becomes easy, it is possible to thicken the electrode mixture layer without thickening the coating slurry serving as the electrode mixture.
In addition, it is possible to decrease the binding agent consisting of organic polymer which was necessary in thickening.

Therefore, comparing with the electrode using a conventional metallic foil as the collector, it is possible to thicken the electrode mixture layer, without leading to an increase in resistance, a result of which it is possible to increase the volume per unit area of the electrode, and contribute to the capacity increase of the lithium ion secondary battery.

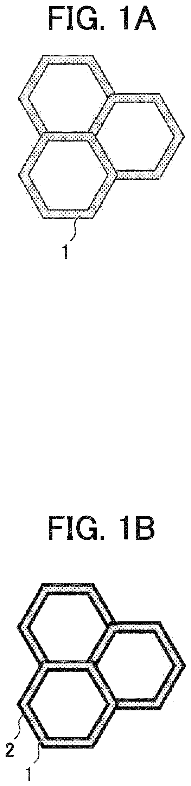

The collector of the electrode for lithium ion secondary batteries of the present invention will be explained using FIG. 1. FIG.1A is a view showing a foam porous body 1 consisting of metal, and FIG. 1(b) is a view showing a collector of the electrode for lithium ion secondary batteries of the present invention.

In the collector of the electrode for lithium ion secondary batteries of the present invention, a carbon layer 2 consisting of carbon material as shown in FIG. 1(b) is disposed on the surface of the foam porous body 1 consisting of metal shown in FIG.1A.
Then, in the electrode for lithium ion secondary batteries of the present invention, the electrode mixture containing electrode active material is filled inside of the network structure of the collector as shown in FIG. 1(b).

As the metal of the foam porous body consisting of metal constituting the collector of the electrode for lithium ion secondary batteries of the present invention, for example, nickel, aluminum, stainless steel, titanium, copper, silver, etc. can be exemplified. Among these, as the collector constituting the positive electrode, a foam aluminum is preferable, and as the collector constituting the negative electrode, foam copper or foam stainless steel can be preferably used.

### (Carbon Layer Consisting of Carbon Material)

The electrode for lithium ion secondary batteries of the present invention is characterized by including a collector having a carbon layer consisting of a carbon material on the surface of the foam porous body consisting of metal.

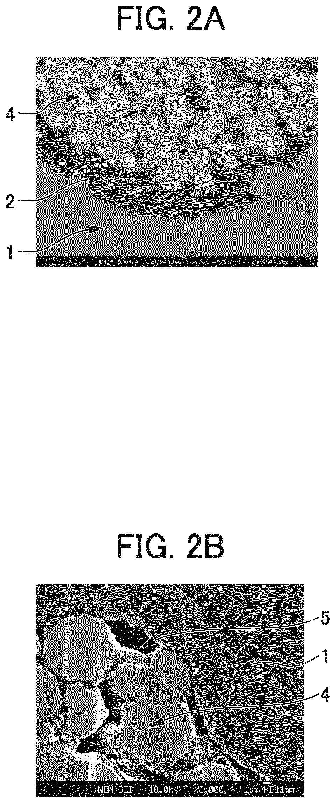

FIG. 2 shows enlarged photos of the electrode for lithium ion secondary batteries of the present invention and a conventional electrode for lithium ion secondary batteries.
FIG.2A is an enlarged photo of the electrode for lithium ion secondary batteries of the present invention, and FIG.2B is an enlarged photo of a conventional electrode for lithium ion secondary batteries made using a foam porous body as the collector.

As shown in FIG.2B, in the conventional electrode for lithium ion secondary batteries, when filling an electrode mixture 4 inside of the network structure of the foam porous body 1, voids 5 occur between the collector consisting of the foam porous body 1 and the electrode mixture 4.
Then, by the voids 5 being present, the electron path to the electrode active material contained in the electrode mixture 4 is deficient, and thus the electron resistance increases.

On the other hand, as shown in FIG.2A, in the electrode for lithium ion secondary batteries of the present invention, when filling the electrode mixture 4 inside of the network structure of the foam porous body 1, the voids 5 cannot be found between the collector and electrode mixture 4, due to the carbon layer 2 being present on the surface of the foam porous body 1.
Therefore, it is possible to form sufficient electron paths, a result of which it is possible to suppress electron resistance.

The carbon material constituting the carbon layer is acetylene black.

For example, in the case of establishing an electrode for lithium ion secondary batteries formed with a carbon layer using acetylene black having high DBP absorption amount, the ion diffusion of the lithium ion secondary battery improves due to the retention property of electrolytic fluid improving, a result of which it is possible to improve the rate characteristics.

In addition, in the case of forming the carbon layer by heating gas or vapor containing carbon as a constituent element using a gas phase method, the electron resistance of the obtained lithium ion secondary battery is drastically suppressed.
As a result thereof, it is possible to drastically improve the durability of the battery.

Therefore, in the electrode for lithium ion secondary batteries of the present invention, by appropriately selecting the material constituting the carbon layer, it is possible to realize the desired performance of the lithium ion secondary battery.

The coverage of the carbon layer relative to the foam porous body surface is not particularly limited; however, in order to realize sufficient electron paths, for example, it is preferably at least 50%, and more preferably at least 70%.

In addition, the thickness of the carbon layer is not particularly limited, and is preferably no more than 5 µm, and more preferably no more than 2 µm.
In the case of exceeding 5 µm, since the compositional proportion of carbon in the electrode will be high, the energy density of the obtained lithium ion secondary battery declines.

### (Oxide Layer)

The collector used in the electrode for the lithium ion secondary batteries of the present invention may have an oxide layer consisting of an oxide of metal between the foam porous body consisting of metal and the carbon layer consisting of carbon material.

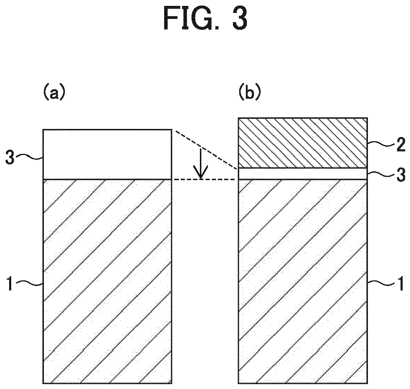

FIG. 3 shows an example of a laminate configuration of the collector used in the electrode for lithium ion secondary batteries of the present invention.
FIG. 3(a) is a cross-sectional view of the foam porous body 1 consisting of conventional metal, and FIG. 3(B) is a cross-sectional view of an example of the collector of the electrode for lithium ion secondary batteries of the present invention.

As shown in FIG. 3(a), the oxide layer 3 consisting of this oxide of metal may be formed on the surface of the foam porous body 1 consisting of metal.
Since the oxide layer 3 is an insulating layer, when the foam porous body 1 is covered by the oxide layer 3, the electron supply to the electrode active material contained in the electrode mixture is insufficient, and the resistance of the obtained lithium ion secondary battery increases.

In the case of the oxide layer 3 being formed on the surface of the foam porous body 1, the collector of the electrode for lithium ion secondary batteries of the present invention arranges the carbon layer 2 on the outer side of the oxide layer 3, as shown in FIG. 3(b).

The method of arranging the carbon layer 2 on the outer side of the oxide layer 3 is not particularly limited; however, for example, according to the gas phase method, when forming a carbon layer in which the gas or vapor used is oxidized, the oxygen is taken away from the oxide forming the oxide layer 3.
For this reason, it is possible to decrease the film thickness of the oxide layer 3, and depending on the case, possible to eliminate the existence of the oxide layer 3.

As described above, since the oxide layer 3 can become a factor for increased resistance of the lithium ion secondary battery, it is possible to greatly contribute to an increase in output of the obtained lithium ion secondary battery by the film thickness of the oxide layer 3 decreasing or disappearing.

### <Production Method of Collector>

The production method of the collector constituting the electrode for lithium ion secondary batteries of the present invention is not particularly limited.
The carbon layer consisting of carbon material is formed on the foam porous body consisting of metal, or on the surface of an oxide consisting of this metal existing on the surface of the foam porous body.
As the formation method of the carbon layer, for example, a gas phase method, liquid phase method or the like can be exemplified.

### (Gas phase method)

In the case of forming a carbon layer consisting of carbon material by a gas phase method, a fluid is heated and brought into contact with the surface of the foam porous body consisting of metal, or the surface of an oxide consisting of this metal existing on the surface of the foam porous body.

The device in the case of the gas phase method is not particularly limited, and it is possible to exemplify a tube furnace of the like, for example.
By fixing the foam porous body on a tube furnace, and heating the fluid while causing to flow, it is possible to form a carbon layer.

The conditions for heating are not particularly limited.
For example, it is heated at a temperature of 500 to 600°C for 1 to 60 minutes.

The fluid used in the gas phase method is preferably a hydrocarbon gas or alcohol vapor.
By heating while bringing into contact the hydrocarbon gas or alcohol vapor with the surface of the object for forming the carbon layer, the hydrocarbon or alcohol is oxidized on the surface of the object, and generates carbon and water.
At this time, the carbon deposits on the object to become a carbon layer, and the water becomes steam and is exhausted to outside.

As the hydrocarbon gas, methane gas or acetylene gas is preferable.
So long as being methane gas or acetylene gas, it is possible to form a layer on the surface in a uniform carbon state.

As the alcohol vapor, it is preferably methanol vapor.
So long as methanol vapor, it is possible to form a carbon layer of uniform thickness.

It should be noted that, according to the gas phase method, when the gas or vapor used is oxidized to form a carbon layer, it takes away the oxygen from the oxide forming the oxide layer existing on the surface of the foam porous body.
For this reason, it is possible to decrease the film thickness of the oxide layer, and depending on the case, it is possible to eliminate the existence of the oxide layer.

The oxide layer can be a factor in resistance increase of the lithium ion secondary battery.

Therefore, according to the gas phase method, due to being able to thin the film thickness of the oxide layer or eliminate the existence thereof, it can greatly contribute to an increase in the output of the obtained lithium ion secondary battery.

### (Liquid Phase Method)

In the case of forming a carbon layer consisting of the carbon material by a liquid phase method, a method of immersing the foam porous body in a carbon dispersion in which carbon is dispersed can be exemplified.
This method is not particularly limited; however, it can be realized by the following method, for example.

First, a carbon dispersion in which carbon serving as the material forming the carbon layer is dispersed in solvent is prepared. The solvent type and carbon concentration of the carbon dispersion are appropriately adjusted according to the film thickness, etc. of the carbon layer desired to be formed.
For example, a condition setting the carbon concentration at 5 to 30 wt% using N-methyl-2-pyrrolidone (NMP) as the solvent can be exemplified.

Next, the foam porous body which is the object for forming the carbon layer is dried.
The conditions of drying are not particularly limited; however, conditions of drying in a vacuum at 120°C for 12 hours can be exemplified.

Next, the dried foam porous body is immersed in the prepared carbon dispersion.
The conditions for immersion are not particularly limited; however, conditions of immersing at 10 to 25°C for 10 minutes to 1 hour can be exemplified.

Next, the foam porous body is extracted from the carbon dispersion, and the carbon dispersion adhered to the foam porous body is impregnated in vacuum.
The conditions of vacuum impregnation are not particularly limited; however, a method of impregnating in a desiccator for 1 to 3 hours can be exemplified.

After impregnating, air blowing is carried out in order to remove excess carbon dispersion.
The method and conditions of air blowing are not particularly limited; however, a method of air blowing using compressed air can be exemplified.

Next, preliminary drying is carried out.
The conditions of preliminary drying are not particularly limited; however, conditions of drying in the atmosphere at 120°C for 10 minutes to 1 hour can be exemplified.

Finally, the formation of the carbon layer is completed by completely drying.
The final drying conditions are not particularly limited; however, a method of conducting drying under a vacuum at 120°C for at least 12 hours can be exemplified.
In the case of forming a carbon layer by a liquid phase method, so long as being powder, it is possible to use without particular limitation as the carbon dispersed in the solvent.
In addition, the particle size thereof is not particularly limited.
For example, it is possible to exemplify a particle size in the range of 10 to 1000 nm as primary particles.

As the porous carbon is acetylene black, having high DBP absorption amount, it is possible to improve the liquid holding property of the electrolytic solution of the electrode for lithium ion secondary batteries.
As a result thereof, the ion diffusion in the lithium ion secondary battery improves, whereby it is possible to improve the rate characteristic.

Therefore, due to being able to appropriately select the material constituting the carbon layer by the liquid phase method, it is possible to realize the desired performance of lithium ion secondary batteries.

### <Production Method of Electrode for Lithium Ion Secondary Batteries>

The production method of the electrode for lithium ion secondary batteries of the present invention is not particularly limited, and can adopt a usual method in the present technical field.

The electrode for lithium ion secondary batteries of the present invention is characterized by using a collector having a carbon layer on the surface of a foam porous body consisting of metal, and filling the electrode mixture into this collector.
The method of filling the electrode mixture into the collector is not particularly limited; however, a method of filling a slurry containing the electrode mixture with pressure inside of the network structure of the collector using a plunger-type die coater can be exemplified.

Alternatively, a method by differential pressure filling can be exemplified which generates a pressure differential between a face of the collector on which placing the electrode mixture and the back face thereto, passing through the holes forming the network structure of the collector by way of the pressure differential to cause the electrode mixture to penetrate and fill inside of the collector.
The nature of the electrode mixture in the case of differential pressure filling is not particularly limited, and may be a dry method which employs powder, or may be a wet method which employs a mixed material containing liquid such as a slurry.

In order to raise the filling amount of the electrode active material, it is preferable to fill the electrode mixture into the entire area of voids in the network structure.

After filling the electrode mixture, it is possible to obtain the electrode for lithium ion secondary batteries employing a usual method in the present technical field.
For example, the electrode for lithium ion secondary batteries is obtained by drying the collector in which the electrode mixture has been filled, and then pressing.
It is possible to improve the density of the electrode mixture by pressing, and possible to adjust so as to be the desired density.

### <Lithium Ion Secondary Battery>

The lithium ion secondary battery of the present invention includes a positive electrode, a negative electrode, and a separator or solid-state electrolyte layer located between the positive electrode and negative electrode.
In the lithium ion secondary battery of the present invention, at least one of the positive electrode and negative electrode is the above-mentioned electrode for lithium ion secondary batteries of the present invention.

In other words, the lithium ion secondary battery of the present invention, the positive electrode may be the electrode for lithium ion secondary batteries of the present invention, the negative electrode may be the electrode for lithium ion secondary batteries of the present invention, or both may be the electrode for lithium ion secondary batteries of the present invention.

### (Positive Electrode and Negative Electrode)

In the lithium ion secondary battery of the present invention, the positive electrode or the negative electrode not adopting the electrode for lithium ion secondary batteries of the present invention is not particularly limited, and may be any electrode functioning as the positive electrode and negative electrode of a lithium ion secondary battery.

The positive electrode and negative electrode constituting the lithium ion secondary battery can constitute any battery by selecting two types from among materials which can constitute electrodes, comparing the charge/discharge potentials of the two types of compounds, then using one exhibiting electropositive potential as the positive electrode, and one exhibiting electronegative potential as the negative electrode.

### (Separator)

In the case of the lithium ion secondary battery of the present invention containing a separator, the separator is located between the positive electrode and the negative electrode.
The material, thickness, etc. thereof are not particularly limited, and it is possible to adopt a known separator which can be used in a lithium ion secondary battery.

### (Solid-State Electrolyte Layer)

In the case of the lithium ion secondary battery of the present invention containing a solid-state electrolyte, the solid-state electrolyte constituting a cell is located between the positive electrode and the negative electrode.
The solid-state electrolyte contained in the solid-state electrolyte layer is not particularly limited, and is sufficient so long as lithium ion conduction between the positive electrode and negative electrode is possible.
For example, an oxide-based electrolyte or sulfide-based electrolyte can be exemplified.

### EXAMPLES

Examples, etc. of the present invention will be explained hereinafter; however, the present invention is not to be limited to these Examples, etc.

### <Example 1>

### (Production of Positive Electrode for Lithium Ion Secondary Batteries)

### (Production of Positive Electrode Collector: Liquid Phase Method)

A foam aluminum having a thickness of 1.0 mm, porosity of 95%, cell number of 46-50 per inch, pore size of 0.5 mm, and specific surface area of 5000 m²/m³ was prepared as the collector.
A carbon layer of the essentials described below was formed by a liquid phase method on the foam aluminum.
The thickness of the formed carbon layer was 2 µm.

Acetylene black (average primary particle size: 35 nm) serving as the material of the carbon layer was dispersed in solvent to prepare a carbon dispersion.
The concentration of the carbon dispersion was set to 20 mass% using N-methyl-2-pyrrolidone (NMP) as the solvent.
The foam porous body serving as the object on which to form the carbon layer was dried in vacuum for 12 hours at 120°C, and then immersed for 10 minutes at 25°C in the prepared carbon dispersion.
Subsequently, the foam porous body was extracted from the carbon dispersion, and the carbon dispersion adhering to the foam porous body was impregnated in a die coater for 1 minute.
After impregnation, air blowing was carried out, the preliminary drying was conducted in the atmosphere for 1 hour at 120°C, followed by drying for 1 hour at 120°C by evacuating to finally complete the carbon layer.

### (Preparation of Positive Electrode Mixture Slurry)

LiNi_{0.5}Co_{0.2}Mn_{0.3}O₂ was prepared as the positive electrode active material.
The positive electrode mixture slurry was produced by mixing 94 mass% positive electrode active material, 4 mass% carbon black as the conduction auxiliary agent, and 2 mass% polyvinylidene fluoride (PVDF) as a binder, and dispersing the obtained mixture in the appropriate amount of N-methyl-2-pyrrolidone (NMP).

### (Formation of Positive Electrode Mixture Layer)

Using a plunger-type die coater, the prepared positive electrode mixture was coated onto the collector so as have a coating amount of 90 mg/cm².
By drying for 12 hours at 120°C in vacuum and then roll pressing with 15 tons pressure, the positive electrode for lithium ion secondary batteries was produced.
The electrode mixture layer of the obtained positive electrode for lithium ion secondary batteries had a basis weight of 90 mg/cm², and density of 3.2 g/cm³.
The produced positive electrode was used by punch processing to 3 cm x 4 cm.

### (Production of Negative Electrode for Lithium Ion Secondary Battery)

### (Production of Negative Electrode Mixture Slurry)

A negative electrode mixture slurry was produced by mixing 96.5 mass% of natural graphite, 1 mass% of carbon black as a conduction auxiliary agent, 1.5 mass% of styrene-butadiene rubber (SBR) as a binder, and 1 mass% of sodium carboxymethyl cellulose (CMC) as a thickening agent, and dispersing the obtained mixture in the appropriate amount of distilled water.

### (Formation of Negative Electrode Mixture Layer)

Copper foil of 8 µm thickness was prepared as the collector.
The produced negative electrode mixture slurry was coated onto the collector using a die coater so as to make a coating amount of 45 mg/cm².
By drying for 12 hours at 120°C in vacuum and then roll pressing with 10 tons pressure, the negative electrode for lithium ion secondary batteries was produced.
The electrode mixture layer of the obtained negative electrode for lithium ion secondary batteries had a basis weight of 45 mg/cm², and density of 1.5 g/cm³.
The produced negative electrode was used by punch processing to 3 cm x 4 cm.

### (Production of Lithium Ion Secondary Battery)

A microporous membrane made into a three-layer laminate of polypropylene/ polyethylene/ polypropylene of 25 µm thickness was prepared as the separator, and punched to a size of 3 cm × 4 cm. Inside of the product of heat sealing an aluminum laminate for secondary batteries and processing into a bag shape, a laminate made by arranging the separator between the positive electrode and negative electrode prepared as described above was inserted to prepare a laminate cell.

As the electrolytic solution, a solution was prepared in which 1.2 moles of LiPF₆ was dissolved in a solvent prepared by mixing ethylene carbonate, dimethyl carbonate and ethyl methyl carbonate in the volumetric ratio of 3:4:3, then injected into the above-mentioned laminate to produce the lithium ion secondary battery.

### <Example 2>

### (Preparation of Positive Electrode for Lithium Ion Secondary Batteries)

### (Preparation of Positive Electrode Collector: Liquid Phase Method)

Similarly to Example 1, a carbon layer was formed on foam aluminum with a liquid phase method.

### (Preparation of Positive Electrode mixture Slurry)

Similarly to Example 1, the positive electrode mixture slurry was prepared.

### (Formation of Positive Electrode mixture Layer)

The produced positive electrode mixture slurry was coating onto the collector and dried similarly to Example 1, and other than making the gap upon performing roll pressing smaller, the electrode for lithium ion secondary batteries was produced similarly to Example 1.
The electrode mixture layer of the obtained positive electrode for lithium ion secondary batteries had a basis weight of 90 mg/cm², and density of 3.6 g/cm³.
The produced positive electrode was used by punch processing to 3 cm x 4 cm.

### (Preparation of Negative Electrode for Lithium Ion Secondary Battery)

The negative electrode for lithium ion secondary batteries was produced similarly to Example 1.

### (Production of Lithium Ion Secondary Battery)

Other than using the positive electrode and negative electrode produced as described above, the lithium ion secondary battery was produced similarly to Example 1.

### <Comparative Example 1>

### (Production of Positive Electrode for Lithium Ion Secondary Batteries)

Other than using the collector as is without forming a carbon layer on the foam aluminum, the positive electrode for lithium ion secondary batteries was produced similarly to Example 1.
The electrode mixture layer of the obtained positive electrode for lithium ion secondary batteries had a basis weight of 90 mg/cm², and density of 3.2 g/cm³.

### (Production of Negative Electrode for Lithium Ion Secondary Battery)

The negative electrode for lithium ion secondary batteries was produced similarly to Example 1.

### (Production of Lithium Ion Secondary Battery)

Other than using the positive electrode and negative electrode produced as described above, the lithium ion secondary battery was produced similarly to Example 1.

### <Comparative Example 2>

### (Production of Positive Electrode for Lithium Ion Secondary Batteries)

Other than using the collector as is without forming a carbon layer on the foam aluminum, the positive electrode for lithium ion secondary batteries was produced similarly to Example 2.
The electrode mixture layer of the obtained positive electrode for lithium ion secondary batteries had a basis weight of 90 mg/cm², and density of 3.6 g/cm³.

### (Production of Negative Electrode for Lithium Ion Secondary Battery)

The negative electrode for lithium ion secondary batteries was produced similarly to Example 1.

### (Production of Lithium Ion Secondary Battery)

Other than using the positive electrode and negative electrode produced as described above, the lithium ion secondary battery was produced similarly to Example 1.

### <Example 3>

### (Production of Electrode for Lithium Ion Secondary Batteries)

### (Production of Positive Electrode Collector: Gas Phase Method)

Similarly to Example 1, a foam aluminum was prepared having a thickness of 1.0 mm, porosity of 95%, cell number of 46 to 50 per inch, pore size of 0.5 mm and specific surface area of 5000 m²/m³ as the collector.
A carbon layer of the essentials described below was formed by a gas phase method on the foam aluminum.
The thickness of the formed carbon layer was 1 µm.

The foam metal was fixed inside of a tube furnace and heated for 10 minutes at 500°C while flowing mixed gas of 10 vol% acetylene gas and 90 vol% argon gas, thereby forming the carbon layer.

### (Preparation of Positive Electrode Mixture Slurry and Formation of Positive Electrode mixture Layer)

The positive electrode for lithium ion secondary batteries was produced by producing the positive electrode mixture slurry similarly to Example 1, and forming the positive electrode mixture layer similarly to Example 1.

### (Production of Negative Electrode for Lithium Ion Secondary Battery)

The negative electrode for lithium ion secondary batteries was produced similarly to Example 1.

### (Production of Lithium Ion Secondary Battery)

Other than using the positive electrode and negative electrode prepared as described above, the lithium ion secondary battery was produced similarly to Example 1.

### <Example 4>

### (Production of Positive Electrode for Lithium Ion Secondary Batteries)

### (Production of Positive Electrode Collector: Gas Phase Method)

A carbon layer was formed with a gas phase method on the foam aluminum, similarly to Example 3.

### (Preparation of Positive Electrode Mixture Slurry and Formation of Positive Electrode Mixture Layer)

The positive electrode for lithium ion secondary batteries was produced by producing the positive electrode mixture slurry similarly to Example 1, and forming the positive electrode mixture layer similarly to Example 2.

### (Production of Negative Electrode for Lithium Ion Secondary Battery)

The negative electrode for lithium ion secondary batteries was produced similarly to Example 1.

### (Production of Lithium Ion Secondary Battery)

Other than using the positive electrode and negative electrode produced as described above, the lithium ion secondary battery was produced similarly to Example 1.

### <Example 5, not covered by the claims>

### (Production of Positive Electrode for Lithium Ion Secondary Batteries)

### (Production of Positive Electrode Collector: Liquid Phase Method)

Other than establishing the material of the carbon layer as furnace black (average primary particle size: 10 nm), a carbon layer was formed on the surface of foam aluminum similarly to Example 1.

### (Preparation of Positive Electrode Mixture Slurry and Formation of Positive Electrode Mixture Layer)

The positive electrode for lithium ion secondary batteries was produced by producing the positive electrode mixture slurry similarly to Example 1, and forming the positive electrode mixture layer similarly to Example 1.

### (Production of Negative Electrode for Lithium Ion Secondary Battery)

The negative electrode for lithium ion secondary batteries was produced similarly to Example 1.

### (Production of Lithium Ion Secondary Battery)

Other than using the positive electrode and negative electrode produced as described above, the lithium ion secondary battery was produced similarly to Example 1.

### <Example 6, not covered by the claims>

### (Production of Positive Electrode for Lithium Ion Secondary Batteries)

### (Production of Positive Electrode Collector: Liquid Phase Method)

Other than establishing the material of the carbon layer as Ketjen black (average primary particle size: 40 nm), a carbon layer was formed on the surface of foam aluminum similarly to Example 1.

### (Preparation of Positive Electrode Mixture Slurry)

The positive electrode for lithium ion secondary batteries was produced by producing the positive electrode mixture slurry similarly to Example 1, and forming the positive electrode mixture layer similarly to Example 1.

### (Production of Negative Electrode for Lithium Ion Secondary Battery)

The negative electrode for lithium ion secondary batteries was produced similarly to Example 1.

### (Production of Lithium Ion Secondary Battery)

Other than using the positive electrode and negative electrode produced as described above, the lithium ion secondary battery was produced similarly to Example 1.

### (Evaluation of Lithium Ion Secondary Battery)

The following evaluations were performed on the lithium ion secondary batteries obtained in Examples 1 to 6 and Comparative Examples 1 and 2.

### (Initial Discharge Capacity)

The lithium ion secondary battery was left for 3 hours at the measurement temperature (25°C), constant-current charging was performed until 4.2 V at 0.33C, then constant-voltage charging was performed for 5 hours at a voltage of 4.2 V, and left for 30 minutes, followed by performing discharging until 2.5 V at a discharge rate of 0.33C to measure the discharge capacity.
The obtained discharge capacity was defined as the initial discharge capacity.

### (Initial Cell Resistance)

The lithium ion secondary batteries after the initial discharge capacity measurement were adjusted to 50% charge level (SOC (State of Charge)).
Next, they were discharged for 10 seconds with a current value of the value of 0.2C, and the voltage 10 seconds after discharging was measured.
Then, the voltage 10 seconds after discharging relative to the current of 0.2C was plotted with the current value as the horizontal axis and the voltage as the vertical axis.
Next, after leaving for 10 minutes, the SOC was returned to 50% by performing auxiliary charging, and then left for 10 more minutes. Next, the above-mentioned operations were performed for each C rate of 0.5C, 1C, 1.5C, 2C, 2.5C, and the voltages 10 seconds after discharging relative to charging at each C rate were plotted.
The slope of the approximate line obtained from each plot was defined as the initial cell resistance of the lithium ion secondary battery.

### (C Rate Characteristic)

The lithium ion secondary battery after the initial discharge capacity measurement was left for 3 hours at the measurement temperature (25°C), the constant-current charging was performed until 4.2 V at 0.33C, then constant-voltage charging was performed for 5 hours until the voltage of 4.2 V, and left for 30 minutes, followed by performing discharging until 2.5 V at the discharge rate of 0.5C to measure the discharge capacity.
The above-mentioned experiments were performed for each C rate of 1C, 1.5C, 2C and 2.5C, and the data summarizing the discharge capacities at each C rate by the capacity retention rate when defining the capacity of 0.33C as 100% was defined as the C rate characteristic.

### (Endurance Discharge Capacity)

As a charge/discharge cycle endurance test, one cycle was defined as the operations of performing constant-current charging until 4.2 V at 0.6C with a constant temperature oven at 45°C, followed by performing constant-voltage changing until the voltage of 4.2 V or charging for 5 hours or until becoming a current of 0.1C, and then leaving for 30 minutes, and then performing constant-current discharge until 2.5 V at a discharge rate of 0.6C and leaving for 30 minutes, and this operation was repeated for 200 cycles.
After the completion of 200 cycles, the constant temperature oven was set to 25°C, and left for 24 hours in a state after 2.5 V discharging, after which the discharge capacity was measured similarly to the measurement of the initial discharge capacity.
This operation was repeated for every 200 cycles, and measured until 600 cycles.

### (Endurance Cell Resistance)

After completion of 600 cycles, it was adjusted to 50% charge level (SOC (State of Charge)), and the endurance cell resistance was obtained by a method similar to the measurement of the initial cell resistance.

### (Capacity Retention)

The endurance discharge capacity for every 200 cycles relative to the initial discharge capacity was obtained, and defined as the capacity retention for each cycle.

### (Resistance Change Rate)

The endurance cell resistance relative to the initial cell resistance was obtained, and defined as the resistance change rate.

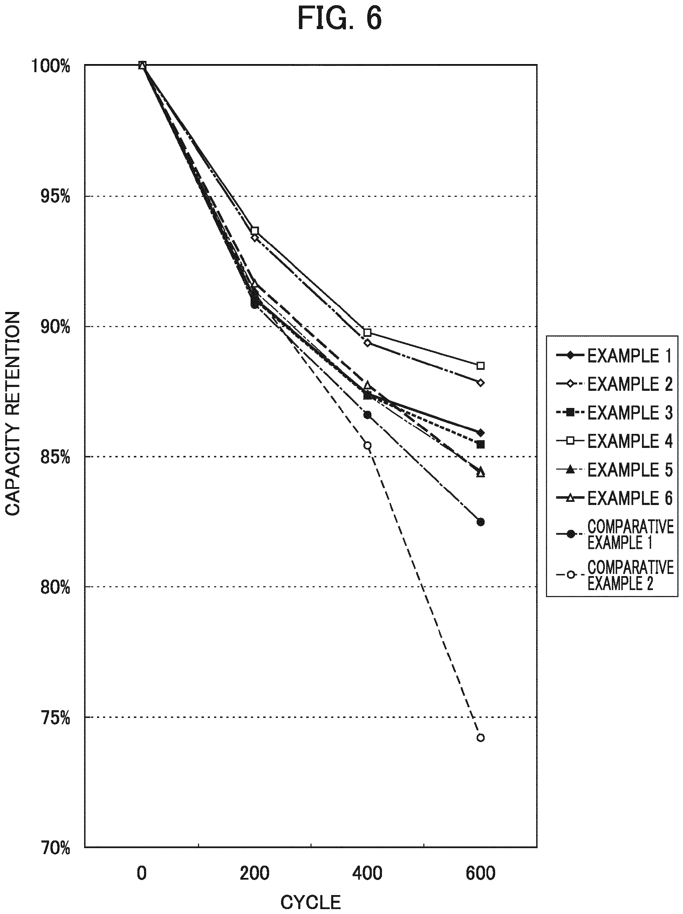

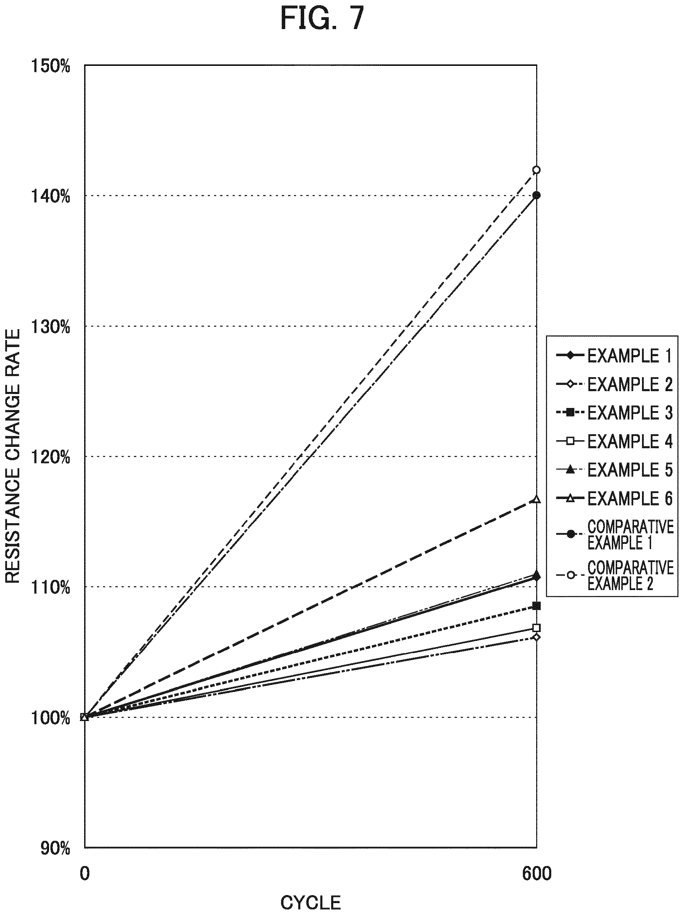

Table 1 shows the configuration of the lithium ion secondary batteries produced in the Examples and Comparative Examples, and the measurement results of each type.

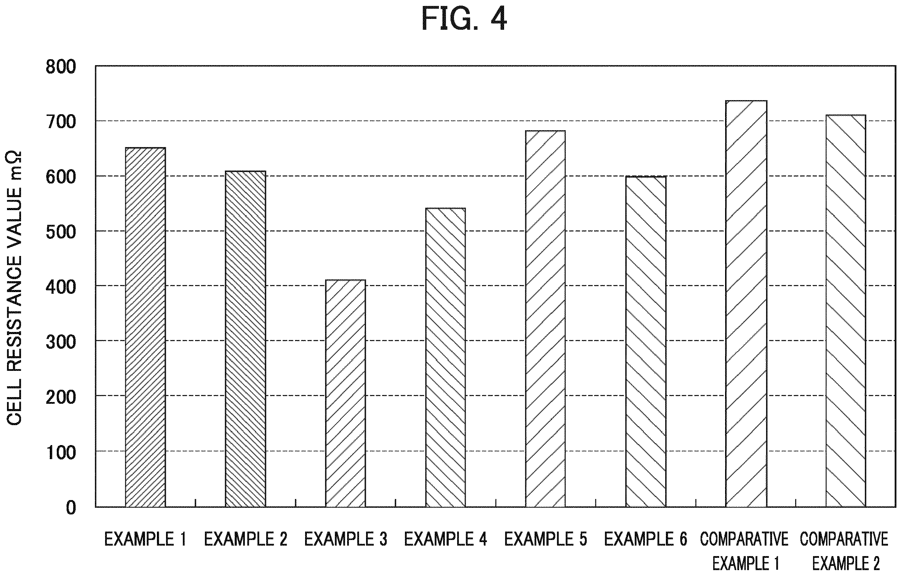

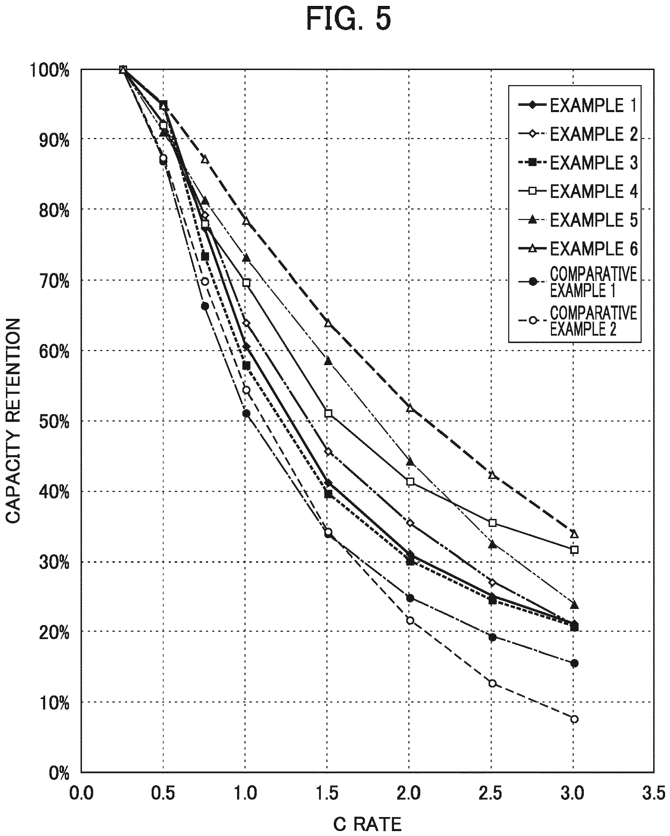

FIG. 4 shows the initial cell resistance of the lithium ion secondary batteries produced in the Examples and Comparative Examples. FIG. 5 shows the C rate characteristic.
In addition, FIG. 6 shows the capacity retention for every 200 cycles of the lithium ion secondary batteries produced in the Examples and Comparative Examples, and FIG. 7 shows the resistance change rate after 600 endurance cycles.

**[Table 1]**

| | | Example 1 | Example 2 | Comparative Example 1 | Comparative Example 2 | Example 3 | Example 4 | Example 5 | Example 6 |
|---|---|---|---|---|---|---|---|---|---|
| Collector having carbon layer | | Positive electrode | Positive electrode | - | - | Positive electrode | Positive electrode | Positive electrode | Positive electrode |
| Positive electrod e | Formation method of carbon la | Liquid phase method | Liquid phase method | - | - | Gas phase method | Gas phase method | Liquid phase method | Liquid phase method |
| | Carbon type | Acetylene black | Acetylene black | | | Acetylene black | Acetylene black | Furnace black | Ketjen black |
| | Thickness of carbon layer (µm | 2 | 2 | - | - | 1 | 1 | 2 | 2 |
| | Density of positive electrode mixture layer (g/cm³) | 3.2 | 3.6 | 3.2 | 3.6 | 3.2 | 3.6 | 3.2 | 3.2 |
| Initial discharge capacity (mAh) | | 152 | 146 | 150 | 144 | 149 | 143 | 152 | 153 |
| Discharge capacity after 600 endurance cycles (mAh) | | 130 | 128 | 128 | 107 | 128 | 127 | 128 | 129 |
| Capacity retention (%) | | 86 | 88 | 85 | 74 | 86 | 89 | 84 | 84 |
| Initial cell resistance (Ω) | | 651 | 410 | 735 | 709 | 410 | 541 | 681 | 598 |
| Cell resistance after 600 endurance cycles (Q) | | 721 | 435 | 1029 | 1005 | 445 | 577 | 756 | 698 |
| Resistance change rate (%) | | 111 | 106 | 140 | 142 | 108 | 107 | 111 | 117 |

As shown in FIG. 4, for the batteries of Examples 1 to 6 made using the electrode for lithium ion secondary batteries of the present invention configured by the collector having a carbon layer on the surface of a foam porous body, the cell resistance was suppressed compared to the batteries of Comparative Examples 1 and 2 made using the electrode configured with a collector not having a carbon layer.

As shown in FIG. 5, the C rate characteristics of Examples 1 to 6 were higher values compared to Comparative Examples 1 and 2.
In other words, for the batteries made using the electrode for lithium ion secondary batteries of the present invention configured by a collector having a carbon layer on the surface of a foam porous body, the ion diffusivity improved.

As shown in FIG. 6, the capacity retention rate for every 200 cycles of Examples 1 to 6 became a higher value as the cycle number increased, compared to Comparative Examples 1 and 2.
In other words, for the batteries made using the electrode for lithium ion secondary batteries of the present invention configured by the collector having a carbon layer on the surface of the foam porous body, the durability improved.

As shown in FIG. 7, the resistance change rate of Examples 1 to 6 have a lower rate of increase compared to Comparative Examples 1 and 2.
In other words, for the batteries made using the electrode for lithium ion secondary batteries of the present invention configured by the collector having a carbon layer on the surface of a foam porous body, the durability improved.

To provide an electrode for lithium ion secondary batteries, and a lithium ion secondary battery made using this electrode for lithium ion secondary batteries, which can sufficiently secure electron conductivity between a foam metal body and an electrode active material in an electrode for lithium ion secondary batteries which establish a foam metal body as the collector, reduce the resistance of a lithium ion secondary batter, and improve the durability.
A carbon layer consisting of carbon material is disposed on a surface of a foam porous body consisting of metal, and used as a collector. More specifically, an electrode for lithium ion secondary batteries includes a collector, and an electrode mixture filled into the collector, in which the collector is made to have a carbon layer consisting of carbon material on a surface of a foam porous body consisting of metal.

### EXPLANATION OF REFERENCE NUMERALS

1 foam porous body
2 carbon layer
3 oxide layer
4 electrode mixture
5 void

## Claims

1. An electrode for lithium ion secondary batteries,
wherein the electrode for lithium ion secondary batteries comprises a collector and an electrode mixture that is filled into the collector, wherein the collector has a carbon layer consisting of carbon material on a surface of a foam porous body consisting of metal and wherein the carbon material is acetylene black.

2. The electrode for lithium ion secondary batteries according to claim 1, wherein the collector further has an oxide layer consisting of an oxide of the metal between the foam porous body and the carbon layer.

3. The electrode for lithium ion secondary batteries according to claim 1 or 2, wherein the foam porous body is a foam aluminum.

4. The electrode for lithium ion secondary batteries according to any one of claims 1 to 3, wherein the electrode for lithium ion secondary batteries is a positive electrode.

5. A lithium ion secondary battery comprising: a positive electrode; a negative electrode; and a separator or solid-state electrolyte layer disposed between the positive electrode and the negative electrode, wherein at least one among the positive electrode and the negative electrode is the electrode for lithium ion secondary batteries according to any one of claims 1 to 4.

## Patentansprüche

1. Elektrode für Lithiumionen-Sekundärbatterien,
wobei die Elektrode für Lithiumionen-Sekundärbatterien einen Sammler und ein in den Sammler gefülltes Elektrodengemisch aufweist,
wobei der Sammler auf einer Oberfläche eines aus Metall bestehenden porösen Schaumkörpers eine aus Carbonmaterial bestehende Carbonschicht aufweist, und wobei das Carbonmaterial Acetylenruß ist.

2. Die Elektrode für Lithiumionen-Sekundärbatterien nach Anspruch 1, wobei der Sammler ferner, zwischen dem porösen Schaumkörper und der Carbonschicht, eine Oxidschicht aufweist, die aus einem Oxid des Metalls des besteht.

3. Die Elektrode für Lithiumionen-Sekundärbatterien nach Anspruch 1 oder 2, wobei der poröse Schaumkörper ein Aluminiumschaum ist.

4. Die Elektrode für Lithiumionen-Sekundärbatterien nach einem der Ansprüche 1 bis 3, wobei die Elektrode für Lithiumionen-Sekundärbatterien eine positive Elektrode ist.

5. Lithiumionen-Sekundärbatterie, welche aufweist: eine positive Elektrode;
eine negative Elektrode sowie einen Separator oder eine Festzustand-Elektrolytschicht, der bzw. die zwischen der positiven Elektrode und der negativen Elektrode angeordnet ist, wobei zumindest eine unter der positiven Elektrode und der negativen Elektrode die Elektrode für Lithiumionen-Sekundärbatterien nach einem der Ansprüche 1 bis 4 ist.

## Revendications

1. Électrode pour batteries secondaires lithium-ion,
dans laquelle l'électrode pour batteries secondaires lithium-ion comprend un collecteur et un mélange pour électrode qui est rempli dans le collecteur, dans laquelle le collecteur comporte une couche de carbone constituée d'un matériau carboné sur une surface d'un corps poreux en mousse constitué d'un métal et dans laquelle le matériau carboné est un noir d'acétylène.

2. Électrode pour batteries secondaires lithium-ion selon la revendication 1, dans laquelle le collecteur comporte en outre une couche d'oxyde constituée d'un oxyde du métal entre le corps poreux en mousse et la couche de carbone.

3. Électrode pour batteries secondaires lithium-ion selon la revendication 1 ou 2, dans laquelle le corps poreux en mousse est une mousse d'aluminium.

4. Électrode pour batteries secondaires lithium-ion selon l'une quelconque des revendications 1 à 3, dans laquelle l'électrode pour batteries secondaires lithium-ion est une électrode positive.

5. Batterie secondaire lithium-ion comprenant : une électrode positive ; une électrode négative ; et un séparateur ou une couche d'électrolyte à l'état solide disposé(e) entre l'électrode positive et l'électrode négative, dans laquelle au moins l'une parmi l'électrode positive et l'électrode négative est l'électrode pour batteries secondaires lithium-ion selon l'une quelconque des revendications 1 à 4.
